# EUROPEAN PATENT APPLICATION

(11) **EP 4 614 048 A1**
(43) Date of publication of application: **10.09.2025**
(21) Application number: 25159903.1
(22) Date of filing: 25.02.2025
(51) Int. Cl.: F16L 21/03, F16L 47/08

(54) **PIPE COUPLER**

(30) Priority: 06.03.2024 NL 2037188
(71) Applicant: Wienerberger AG, 1100 Wien (AT)
(72) Inventor: Bannert, Oliver, 1100 Vienna (AT); Wijnker, Christiaan Johannes Nicolaas, 1606 XC Venhuizen (NL); Schouten, Michael Adrianus Jacobus, 1689 WT Zwaag (NL)
(74) Representative: Nederlandsch Octrooibureau

(57) **Abstract**

A coupler comprises a first end for receiving a pipe section and a second end, and a sealing system comprising a sealing lip extending around a circumference of the coupler. The sealing lip extends in a wave shape around the at least part of the circumference.

## Description

### FIELD OF THE INVENTION

This relates to couplers, and in particular a coupler for connecting with a pipe end and/or fitting.

### BACKGROUND

Pipes, fittings or/and tubes are commonly used in various fields, including in-house discharge pipes, and underground pipes for drainage systems such as municipal sanitary sewer systems and/or storm sewer systems. To connect pipe sections with a certain tensile strength, there are various conventional techniques including gluing or welding together the pipe sections.

Another method of connection is using a coupler with an opening and a seal on the inside. Such a seal is typically formed of a sealing ring in an interior groove of the coupler. For insertion, a spigot end of the pipe can be lubricated and/or chamfered, and then is inserted into the coupler to form a sealing connection.

WO 98/37351 A1 shows an annular seal for a pipe joint, intended for the joint between a socket of a pipe part and a smooth, cylindrical spigot end of a subsequent pipe part to be inserted into this socket, which seal comprises at least one sealing ring which is made of an elastic material and is deformable in the radial direction inside a chamber of the socket under the influence of the spigot end inserted in the axial direction, characterized in that the axial section of the sealing ring changes in shape, location or flexibility in the circumferential direction. Preferably, the change runs in the form of waves.

EP0017300 A1 shows a sealing body of an elastomeric material which may be attached chemically and/or mechanically to a fixing detail of thermoplastic, reacted elastomer or thermosetting material, which is secured to the end of a pipe section to make a reliably sealed connection. The sealing body has a head section together with a sealing flap; the head section being fitted into one or more recesses in the fixing detail. The sealing body may be injection moulded into the fixing detail or be moulded separately by a variety of methods according to the material used. The fixing detail is a sleeve with a "U" or "J" cross-section, and the expense involved in fitting separately a retaining ring, a sealing body and a fixing detail is reduced considerably. The seal can be made in a single operation. Separate stocks of seals are not necessary and the seal cannot be fitted incorrectly.

EP4249786 A1 shows a sealing bushing for a connector for distributing a fluid comprising a female component in which a bushing seat is obtained and a hollow male component engaged to one another. The sealing bushing is inserted into the bushing seat, allowing the sealing engagement between said components, and is constituted by a cylindrical body that extends about a bushing axis. On at least one inner side surface or on one outer side surface of the cylindrical body, at least one annular rib is obtained that is suitable for creating a fluid seal with an outer surface of the male component or with an inner surface of the bushing seat. The annular extension profile of the annular rib has at least one axial component parallel to the bushing axis such that the compression of the annular rib during the insertion of the male component into the sealing bushing occurs gradually.

EP3940281 A1 shows a pipe sleeve, in particular of a pressureless pipe arrangement, comprising a base body which forms a cylindrical cavity, an annular sealing means which projects from the base body into the cavity, and a stop with at least one elastic stop element which projects from the base body into the cavity, wherein the cavity is designed for inserting a pipe through the sealing means until it rests against at least one stop element, wherein the at least one stop element limits an insertion depth of the pipe in the undeformed state and does not limit the insertion depth in the elastically deformed state, and wherein the at least one stop element can be elastically deformed radially outwards by means of an axial load on the stop element.

### SUMMARY OF THE INVENTION

According to a first aspect, a coupler comprises a first end for receiving a pipe section and a second end, and a sealing system comprising a sealing lip extending around a circumference of the coupler. The sealing lip extends in a wave shape around the at least part of the circumference. The sealing system can be located a distance from the first end (e.g., where the first end is formed of a substantially rigid material around the circumference, and then the sealing system formed of flexible material starts at some distance from the first end, not directly at or adjacent to the first end).

Such a system allows for a good sealing connection between a pipe and coupler while allowing for lowered insertion and/or extraction forces due to the wave shape of the sealing lip. The wave shape ensures that the pipe end only encounters part of the seal at a time for insertion, lowering the forces required and allowing for reduction or elimination of lubrication and/or chamfering for insertion. This results in an overall more efficient installation process.

According to an embodiment, the wave shape extends around the entire circumference of the coupler. Optionally, this is the inner circumference. Further optionally, the wave shape is symmetric over at least one diameter and/or rotationally symmetric (e.g., over 90 or 180 degrees). By forming the wave shape over the entire circumference, the sealing system is able to provide an effective seal yet allow for reduced insertion and/or extraction forces, thereby making for quicker and easier installation or removal. Forming a symmetric wave can help to promote evenly balanced insertion and extraction forces all around the circumference.

According to an embodiment, the coupler defines a pipe section insertion direction along a central axis, and the wave shape extends along the insertion direction such that the distance between the first end and the sealing lip varies along the circumference. By varying the distance between the first end and the sealing lip, when the pipe is inserted along the insertion direction, the end of the pipe only encounters part of the seal at a time. This can allow for lower insertion forces, thereby making it easier for the person assembling the pipe and coupler, as well as reduce or eliminate any need for lubrication and/or chamfering of the pipe end for insertion. Thus, insertion and assembly can be performed more efficiently overall. Typically the sealing lip would be along the inner circumference of the coupler, though in some embodiments, the sealing lip could be on an outside of the coupler and thus the coupler would connect inside a separate pipe or fitting with the outside sealing lip sealing to the pipe. In some embodiments, the wavy seal could be on the pipe or fitting instead, thus also providing the same benefits of sealing connection with easier insertion and extraction forces.

According to an embodiment, the sealing lip extends at an angle toward the second end. The angle could be, for example, 15 - 75 degrees, preferably 25-65 degrees, more preferably about 45 degrees. The angle of sealing lip can help to ensure the effectiveness of the seal while allowing for easy insertion.

The sealing system is formed of a flexible material extending around the entire circumference from an inside to an outside of the coupler. Flexible material generally means that the material can elastically deform and then return to its original shape when the deforming forces are removed. This typically means the material can bend, compress or expand without breaking or cracking. Optionally, such flexible material can be a thermoplastic elastomer ("TPE"), Thermoplastic Vulcanizates ("TPV"), Thermoplastic Polyolefins ("TPO"), rubber or any other similarly flexible material. Using a flexible material for the sealing system which extends from an inside to an outside of the coupler without being covered by rigid material allows for the sealing system to be able to flex (e.g., expand outward) for easier insertion or extraction, even when the pipe or fitting is not precisely cut or chamfered. This makes for an easier installation or extraction for the user. The flexible material can follow generally the shape of the wave or seal around the circumference of the coupler, for example extending 0,1 to 10 mm, preferably 1-8 or 1-5 mm, on each side of the sealing lip. The flexible material can extend different lengths on each side of sealing lip, for example 0,1 - 1 mm on a first side and 2-7 mm on a second side.

According to an embodiment, the inner surface of the coupler from the first end to the sealing system and from the second end to the sealing system is a substantially rigid material. Optionally, this material is a plastic such as e.g. polypropylene ("PP"), a metal or any other suitable material. By forming most of the coupler inner surface of a substantially rigid material, the coupler can provide a strong connection to the pipe while allowing for easier insertion or extraction with the flexible sealing system.

According to an embodiment, an outer surface of the sealing system is offset from the outer surface of parts of the coupler formed of substantially rigid material, for example, offset radially inward. This could be, for example, 0.1 to 10 mm inward from the outer surface of the coupler not part of the sealing system (e.g., rigid outer surface). Such a configuration helps to protect the flexible material of the sealing system from damage, for example, from a drop or dragging along the floor or ground. This can be especially useful in the transportation to a site and during the installation process

According to an embodiment, the coupler further comprises a second sealing system comprising a second sealing lip extending around an inner circumference of the coupler, wherein the second sealing lip extends in a wave shape around the at least part of the inner circumference. The second sealing system can be offset along an insertion direction form the sealing system, and can also be formed of flexible material. Such a second sealing system can provide additional sealing capacities with similar benefits to those already discussed.

According to an embodiment, the coupler further comprises a stop edge extending around the inner circumference of the coupler and located between the second end and the sealing system. Optionally, the stop edge comprises a rigid lip (e.g., an interrupted lip) and a flexible portion adjacent to and connected (e.g., moulded or bonded) to the rigid portion, the flexible portion with a receiving surface for receiving an end of a pipe section. Further optionally, the upper surface of the flexible portion can be angled and/or in a wave shape. Such a stop edge formed of a rigid portion and a flexible portion ensures that the pipe end cannot move beyond the stop edge for proper insertion depth, and the flexible portion can act as a buffer, helping to decouple parts in the system thereby reducing transmission of the vibrations and sound in the overall piping system. Moreover, the flexible part can allow for thermal elongation of the system, reducing or eliminating any need for an expansion gap. This can simplify the installation process and help to avoid installation errors by allowing for a plain connection between the coupler and pipe end.

In some embodiments a clamp (e.g., mechanical clamp) could be connected to the coupler, for example at the first end around the coupler opening. This can allow for the connection to bear higher pressure loads without risk of separation of the pipe end and coupler than a fully rigid connection.

According to a further aspect, a coupling system includes a pipe and the coupler as previously described. The pipe has a first end extending inside the coupler, with the sealing system sealing around the pipe for a fluid tight connection. Optionally, the assembly further comprises a clamp which clamps around the first side of the coupler and the pipe. Further optionally, the clamp can include one or more edges, teeth and/or lips (e.g., an interrupted lip) to secure around the coupler and/or pipe. Further, such a clamp could help provide additional pressure on sealing system to ensure the seal operates correctly, maintaining a sealing connection between the coupler and pipe. Such a pipe and coupler provide a strong, fluid-tight sealing while allowing for easier insertion and/or extraction forces due to the wavy shape of the sealing system and/or sealing lip. The clamp can provide a simple way to allow the connection to bear higher pressure loads without risk of separation between the pipe and coupler.

According to a further aspect, a method of manufacturing a coupler comprises injection moulding a rigid part with a first end for receiving a pipe section and a second end, the rigid part formed of a rigid material; and moulding flexible material to form a sealing system comprising a sealing lip extending around a circumference of the coupler, wherein the sealing lip extends in a wave shape around the at least part of the circumference. Optionally, the step of moulding further comprises forming one or more portions of an outside of the coupler of flexible material and/or forming a receiving part of a stop edge of the flexible material. In some embodiments, the injection moulding process could be performed in reverse, first moulding the flexible material and then the rigid. Such a two-step injection moulding process results in a strong and flexible coupler that can allow for lower insertion and/or extraction forces through the wavy sealing system and/or sealing lip. Forming receiving parts of the stop edge of flexible material in the process can result in reducing transmission of vibrations thereby providing more effective sound reduction in the piping system, as well provide a simple connection that can omit the need for any expansion gap and related complications in the installation.

### BRIEF DESCRIPTION OF THE DRAWINGS

The invention will be described further with respect to embodiments shown in the drawings.
FIG. 1A shows a perspective top view of a coupler;
FIG. 1B shows a cross-sectional view of the coupler of FIG. 1A;
FIG. 1C shows a view of the sealing system of the coupler of FIG. 1A;
FIG. 1D shows a close-up cross section of the connection between sealing system and rigid parts of the coupler of FIG. 1A;
FIG. 2A shows a cross-sectional view of a pipe being inserted into a coupler;
FIG. 2B shows a cross-sectional view of the pipe fully connected to the coupler;
FIG. 3 shows a cross-sectional view of a second embodiment of a coupler;
FIG. 4A shows a top perspective view of a clamp for use with a coupler;
FIG. 4B shows a bottom perspective view of the clamp of FIG. 4A; and
FIG. 4C shows the clamp in use with a pipe and coupler.

### DESCRIPTION

The following is a description of certain embodiments of the invention, given by way of example only and with reference to the figures. It is also to be understood that the terminology used herein is for the purpose of describing particular aspects only and is not intended to be limiting.

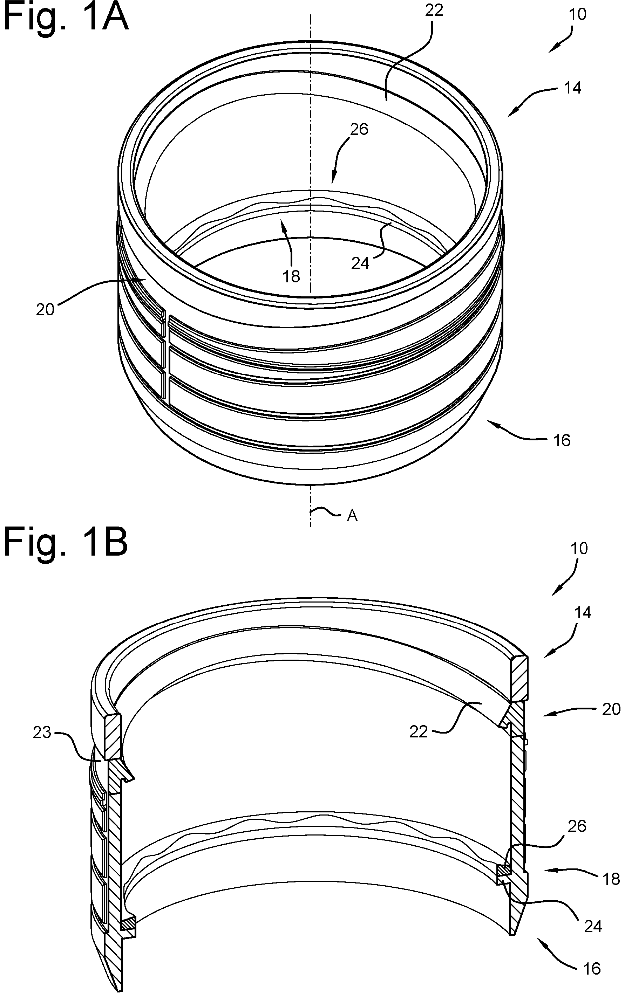

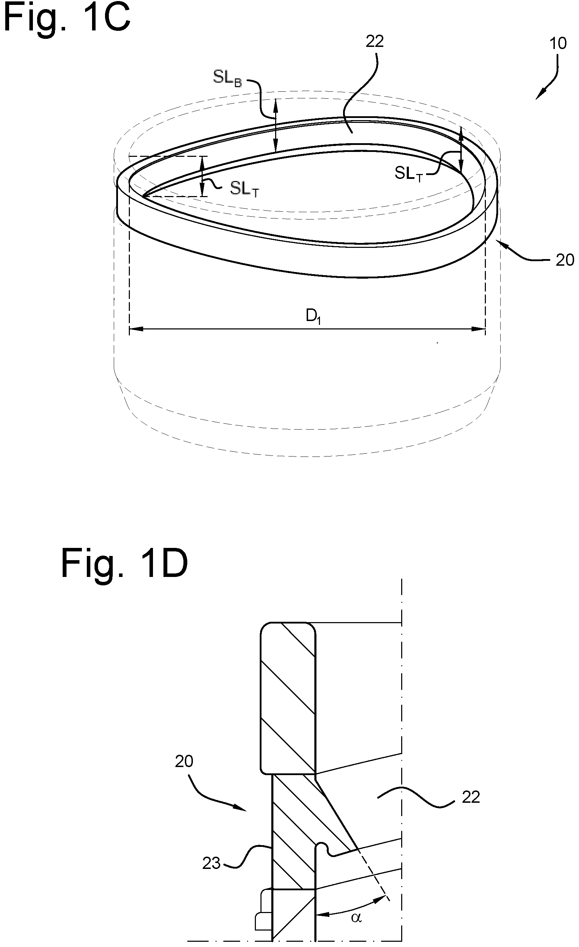

FIG. 1A shows a perspective top view of coupler 10; FIG. 1B shows a cross-sectional view of coupler 10; FIG. 1C shows a view of the sealing system 20 of coupler 10; and FIG. 1D shows a close-up cross section of the connection between sealing system 20 and rigid parts of coupler 10.

Coupler 10 includes first end 14, second end 16, stop edge 18 and sealing system 20. Coupler 10 is generally cylindrical or oval shaped and defines a pipe section insertion direction along a central axis A to receive a pipe section through first end 14. In other embodiments (e.g., where the pipe is a different shape), coupler 10 could have another general shape (e.g., square or triangular).

Sealing system 20 is generally located between first end 14 of coupler and stop edge 18, and is typically located closer to the first end 14 than stop edge 18 but at a distance from first end 14, though can vary depending on coupler requirements. Sealing system 20 is formed of a flexible material, for example, TPE, TPV, TPO or rubber, which typically extends from an inside to an outside of coupler 10 at the location of sealing system 20. As can be seen in Fig. 1D, outer surface 23 of sealing system 20 is also offset, or set radially inward from the outer surface of the rest of coupler 10 (the generally rigid parts). This can be, for example, 0,1 to 10 mm, preferably 0,2 to 5 mm though can vary depending on the size of the coupler, materials used, etc.

Sealing system 20 comprises sealing lip 22 extending around the circumference of coupler 10, in this case the inner circumference (though could be the outer circumference in some embodiments), and can extend at an angle A (e.g., 15-75 degrees, see Fig. 1D) toward second end 16. Sealing lip 22 and sealing system 20 extend in a wave shape around at the circumference of coupler 10, meaning that the location of the sealing lip 22 varies along the insertion direction with respect to the first end 14 (or a plane of insertion perpendicular to axis A if first end 14 is not in a plane) over at least part of the sealing lip 22. As can be seen in Figs. 1B-1C, sealing lip 22 extends from a position about 6 mm from first end 14 at position SL_{T} (the top of the wave); and about 13 mm from first end 14 at position SL_{B} (the bottom of the wave). Thus, sealing lip 22 and sealing system 20 is symmetric along diameter D₁. These are examples only, and sealing lip and location could vary in other embodiments. In some embodiments, coupler 10 could include two or more sealing systems 20, located at varying distances along axis A between first end 14 and stop edge 18. Each could include a sealing lip and an at least partially wavy shape such as that shown in sealing system 20 of Figs. 1A-1D.

The wave shape can be repetitive, sinusoidal, sawtooth, square or any other suitable shape, with a wave length (the length of the wave before it repeats) equal to 1-1/10 of the circumference (meaning the wave would repeat 0 to 10 times), preferably 1-1/5 of the circumference, more preferably 1-1/3 or 1-1/2 of the circumference. In coupler 10 shown in Figs. 1A-1D, the wave length is about ½ of the circumference and extends over the entire circumference, meaning that the wave repeats once (i.e., has two wave lengths) as it goes around the circumference. However, other embodiments could have a more repetitive wave. Sealing system 20 and/or sealing lip 22 can in some embodiments be rotationally symmetric, for example, being 90 or 180 degrees rotationally symmetric.

Stop edge 18 includes lip 24 extending radially inward around the inner circumference of coupler 10 between second end 16 and sealing system 20. Lip 24 is generally rigid and annular, and formed of the same generally rigid material as the inner circumference of coupler 10 (outside of sealing system 20), for example a plastic material such as polypropylene ("PP") or a metal. On a top side of rigid lip 24 is wavy layer 26. Wavy layer 26 is formed of flexible material (e.g., TPE), generally the same material as sealing system 20. Wavy layer 26 is connected, for example, bonded or moulded to lip 24 on a lower surface. The upper surface of layer 26 is where the wave is located. The wave in layer 26 is generally a sinusoidal wave or can have any other shape or property, with a wave length equal to or different from the wave of sealing system 20 and lip 22. The wavy surface of layer 26 can extend through its length radially or could vary in the radial direction.

As seen in Fig. 1B, with the exception of sealing system 20 and wavy layer 26, the inner surface of coupler 10 is formed of rigid material (e.g., PP). Some outer portions can have flexible material over the rigid portion, but this is typically for aesthetic purposes and the rigid material forming most of the length of coupler 10 gives coupler 10 strength and stability for insertion, coupling and sealing.

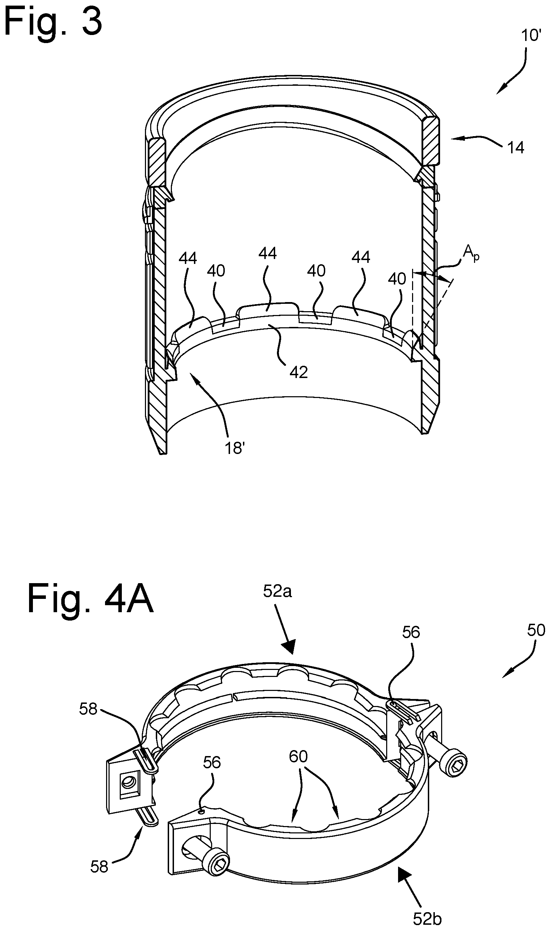

Figure 3 shows a further embodiment of a coupler 10' with a stop edge 18' with a different configuration. Thus, only the differences will be discussed. Stop edge 18' comprises interrupted lip 40, flexible layer 42 and protrusions 44. Lip 40 is made of rigid material extending radially inward from inner circumference. Lip 40 is interrupted by protrusions 44 formed of flexible material and extending axially toward first end 14 above and closer to first end 14 than lip 40. This could be, for example 1-5 mm above lip 40, preferably 2,5 - 3,5 mm above lip 40 toward first end 14. Any number of protrusions could be used around the inner circumference of coupler 10', for example, 3-25, preferably 4-15, more preferably 5-10. Protrusions can include an angle A_{P} on an upper surface, for example, between 0-85 degrees from vertical, preferably 15-75 degrees, more preferably 45 degrees. Such an angle can help to fit a chamfered pipe and provide a receiving surface for the end of pipe which does not allow connection to the rigid portions of pipe (thus reducing vibrations and sound). Before the angled surface, the edges or inner surfaces of flexible layer 42, interrupted lip 40 and protrusions 44 typically align and extend parallel to the inner surface of coupler 10'. Flexible layer 42 typically functions as a flow channel to form protrusions 44.

Coupler 10, 10' is typically formed of a two-step injection moulding process, with a first moulding step to form the substantially rigid (e.g., PP) parts of coupler 10. The second step is to mould (or overmould) the flexible parts, sealing system 20, layer 26 or layer 42 with protrusions 44, and any outer layers. Thus, coupler 10 is formed integrally as one part, making coupler 10, 10' strong and stable despite the use of different materials and no direct reinforcement of sealing system 20 area with more rigid material.

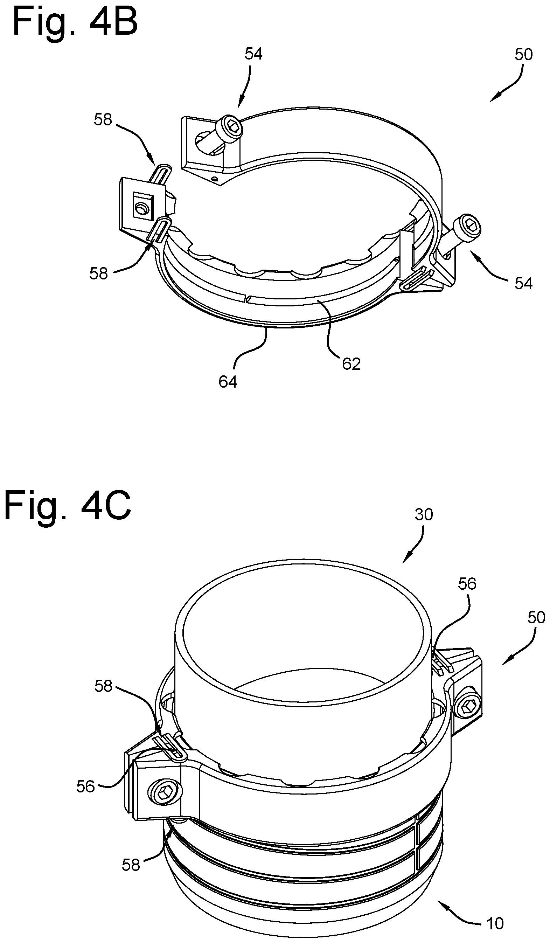

FIG. 4A shows a top perspective view of a clamp 50 for use with a coupler; FIG. 4B shows a bottom perspective view of the clamp 50 and FIG. 4C shows the clamp in use with a pipe 30 and coupler 10.

Clamp 50 is formed of two halves 52a, 52b, which connect together at their ends. The halves can be the same, symmetric or could be different (complementary). In the embodiment shown, the connections are with screws 54, pins 56 and channels 58, with each half being the same (making for easier manufacture and assembly). Channels fit around pins 56 to guide the halves 52a, 52b of clamp 50 together tightly to clamp over an end of coupler 10, 10' (see Fig. 4C). Clamp includes teeth 60 extending radially inward from one side of clamp 50; an interrupted lip 62 and an lower edge 64. As shown in FIG. 4C, clamp 50 fits around coupler 10, 10' and pipe 30 when pipe is inserted into coupler 10. Clamp 50 secures halves 52a, 52b through pins 56 connecting inside channels 58 and screws 54 tightening halves 52a, 52b to each other as well as to coupler 10, 10' and pipe 30. Teeth 60 connect to pipe 30 to secure pipe 30 to coupler 10, 10' and reduce any axial movement to ensure pipe 30 does not slide out of coupler 10, 10'. Interrupted lip 62 can connect to outside of coupler 10, 10', and in some embodiments can follow the wavy design of sealing system and/or sealing lip. Thus, interrupted lip can help to ensure that sealing lip 22 stays connected to pipe 30 to prevent any leakage. The interruptions can help to avoid the squeezing and deforming of flexible material in an unintended way by the clamp therefore reducing the possibility that the flexible material is damaged, particularly at the ends of each half 52a, 52b, where they come together.

Lower edge 64 can fit around coupler 10, 10', in some cases aligning with an edge and/or a groove of outer material for axial gripping and stability. In some cases, this groove could be especially deep (e.g., extend further for gripping purposes. Thus, clamp 50 can be used as a simple way to allow the connection to bear higher pressure loads with lower risk of separation and/or leakage between the pipe 30 and coupler 10, 10'.

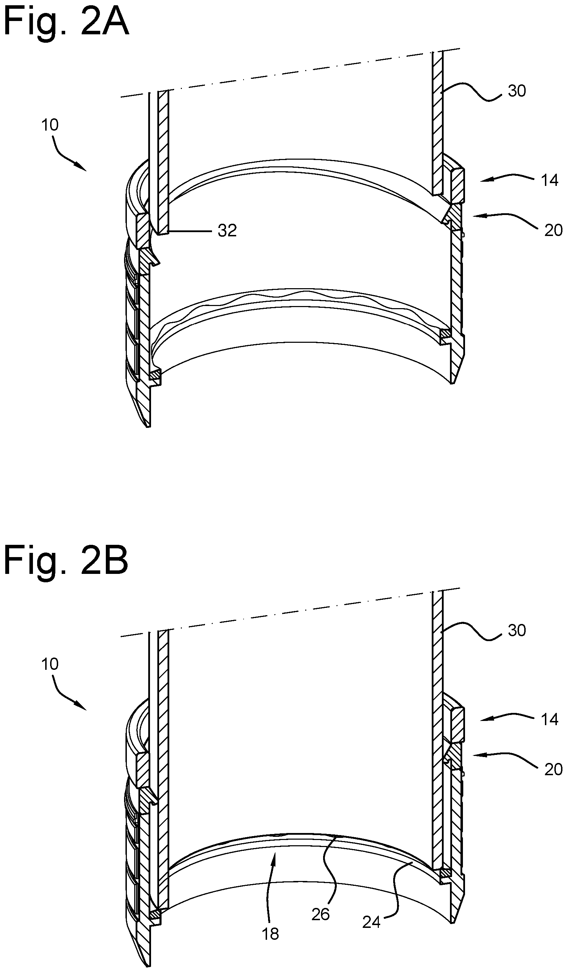

In use, as shown in Fig. 2A, a pipe 30 is inserted into first end 14 of coupler 10, 10'. The shape of sealing lip 22 (not in a single plane or cross-section of coupler 10, 10') allows for pipe 30 to encounter only part of sealing lip 22 at a time as pipe moves through the insertion direction further into coupler 10, 10'. Additionally, the flexible material allows sealing system 20 to expand as pipe is pushed through sealing system 20, thus allowing for a reduction of insertion or extraction forces. Fig. 2B shows pipe 30 being fully inserted, with end 32 of pipe 30 connecting to wavy layer 26 of stop edge 18. If pipe 30 were inserted into coupler 10' of Fig. 3, end 32 would connect to protrusions 44 and not contact interrupted lip 40. In some embodiments, clamp 50 can then be connected around pipe 30 and coupler 10, 10', as shown in Fig. 4C.

Such a configuration of pipe and coupler provides a strong and fluid tight connection with lessened insertion and/or extraction forces required and can also reduce or eliminate any need to lubricate or chamfer pipe 30 end before insertion. Thus, this results in a much faster and more flexible installation, and results in less waste on-site as the need for lubrication and/or chamfering can be reduced or eliminated with such a configuration. Additionally, the wavy geometry of sealing lip 22 and sealing system 20 overall helps to ensure that the seal is not moved or pushed out even if the end of pipe 30 is not cut properly or chamfered in the correct way. Further, by setting the outer surface of sealing system inward from the outer rigid surface, flexible sealing system 20 is protected against damage from falling or improper handling (e.g., dropping or dragging the coupler and pipe on the ground) before or during installation. Wavy layer 26 or protrusions 44 formed of flexible material (on top of rigid lip layer 24 or extending further towards the first end than lip 40) provides a stop edge 18 which pipe 30 cannot move past for proper insertion depth while reducing transmission of vibrations in the piping system and therefore creating a sound absorption buffer with the pipe 30 end 32 connecting to flexible material only. Thus, the configuration results in overall more effective sound reduction and also allows for eliminating any need for expansion gaps, thereby providing a more simple and smooth installation process which can bear higher loads (particularly when used in combination with a mechanical clamp).

While the term "pipe" is used generally, this can indicate a pipe, a fitting, a pipe and fitting together and/or a spigot end of a pipe. While the sealing lip is shown in the example embodiments to be at an inside of the coupler, in other embodiments, the sealing lip could be on an outside of the pipe or coupler. In such a system, the sealing lip would connect to the flexible sealing system and function in the same manner to provide a sealing connection between the pipe and coupler while allowing for lower insertion and extraction forces.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. Coupler (10, 10') comprising:
- a first end (14) for receiving a pipe section and a second end (16), and
- a sealing system (20) comprising a sealing lip (22) extending around a circumference of the coupler, wherein the sealing lip extends in a wave shape around the at least part of the circumference,
- wherein the sealing system (20) is formed of a flexible material extending around the entire circumference from an inside to an outside of the coupler and is located a distance from the first end.

2. The coupler (10, 10') according to claim 1, wherein the wave shape extends around the entire circumference of the coupler.

3. The coupler (10, 10') according to any of the preceding claims, wherein the sealing lip (22) extends around the inner circumference of the coupler.

4. The coupler (10, 10') according to any of the preceding claims, wherein the coupler defines a pipe section insertion direction along a central axis (A), and wherein the wave shape extends along the insertion direction such that the distance between the first end and the sealing lip varies along the circumference.

5. The coupler (10, 10') according to any preceding claim, wherein the wave shape is symmetric over at least one diameter.

6. The coupler (10, 10') according to any preceding claim, wherein the sealing lip (22) extends at an angle toward the second end.

7. The coupler (10, 10') according to claim 1, wherein the inner surface of the coupler from the first end to the sealing system and from the second end to the sealing system is a substantially rigid material.

8. The coupler (10, 10') according to any of preceding claims, wherein the flexible material is thermoplastic elastomer.

9. The coupler (10, 10') according to any of the preceding claims, wherein the substantially rigid material is a plastic or metal.

10. The coupler (10, 10') according to any of the preceding claims, wherein an outer surface of the sealing system (20) is offset radially inward from an outer surface of parts of the coupler formed of substantially rigid material .

11. The coupler (10, 10') according to any of the preceding claims, and further comprising a stop edge (18) extending around the inner circumference of the coupler and located between the second end (16) and the sealing system (20).

12. The coupler (10, 10') according to claim 11, wherein the stop edge (18) comprises a rigid portion and a flexible portion comprising a plurality of flexible protrusions for receiving an end of a pipe section.

13. The coupler (10, 10') according to any of the preceding claims, and further comprising a pipe (30) with a first end (32) extending inside the coupler.

14. A method of manufacturing a coupler (10, 10'), the method comprising:
injection moulding a rigid part with a first end for receiving a pipe section and a second end, the rigid part formed of a rigid material; and
moulding flexible material to form a sealing system (20) extending around the entire circumference from an inside to an outside of the coupler and located at a distance from the first end, the sealing system (20) comprising a sealing lip (22) extending around the circumference of the coupler, wherein the sealing lip (22) extends in a wave shape around the at least part of the circumference.

15. The method of claim 14, wherein the step of moulding further comprises:
forming one or more portions of an outside of the coupler (10, 10') of flexible material and/or
forming a receiving part of a stop edge of the flexible material.
